# FASCICULE DE BREVET EUROPEEN

(11) **EP 4 083 942 B1**
(45) Date de publication et mention de la délivrance du brevet: **04.12.2024**
(21) Numéro de dépôt: 22169906.9
(22) Date de dépôt: 26.04.2022
(51) Int. Cl.: G06V 20/52, G06V 40/20

(54) **DISPOSITIF ET PROCÉDÉ DE SURVEILLANCE D'UNE INSTALLATION DE MANIPULATION ET DE CONDITIONNEMENT D OBJETS DE VALEUR**
VORRICHTUNG UND VERFAHREN ZUR ÜBERWACHUNG EINER ANLAGE ZUR HANDHABUNG UND VERPACKUNG VON WERTGEGENSTÄNDEN
DEVICE AND METHOD FOR MONITORING AN INSTALLATION FOR HANDLING AND PACKAGING VALUABLES

(30) Priorité: 26.04.2021 FR 2104310
(43) Date de publication de la demande: 02.11.2022
(73) Titulaire: Oberthur Fiduciaire SAS, 75008 Paris (FR); ORME, 31670 Labege (FR)
(72) Inventeur: SERBOUH, Idir, 35510 CESSON SEVIGNE (FR); MARTI, Lucas, 31320 CASTANET TOLOSAN (FR)
(74) Mandataire: Regimbeau

(56) Documents cités:
- US-A1- 2005 169 367
- US-A1- 2011 001 799
- US-A1- 2014 244 344

## Description

### DOMAINE TECHNIQUE GENERAL

La présente invention se situe dans le domaine général de la manipulation et du conditionnement d'objets de valeur. Elle trouve une application particulière dans le domaine fiduciaire, notamment quand on a affaire à la manipulation de supports, par exemple en papier et/ou en polymère, pour documents fiduciaires, d'éléments de sécurité pour documents fiduciaires, de feuilles de billets de banque, de « briques » de billets de banque (c'est-à-dire d'un ensemble de billets empilés, banderolés et/ou filmés), ou de contenants de billets, par exemple de caisses ou de palettes.

### ETAT DE LA TECHNIQUE

Un « objet de valeur » est un objet qui, du fait de sa valeur marchande ou numéraire, présente un risque de vol et justifie donc que sa manipulation et son conditionnement soient réalisés sous surveillance, afin de réduire les risques de manipulation non autorisée, notamment d'actes de malveillance et en particulier de vol.

A titre non limitatif, on peut citer les billets de banques et autres documents sécurisés (passeports, visas, ...) à tous leurs stades de fabrication (c'est-à-dire en cours de fabrication ou à l'issue de celle-ci), des parfums de luxe, des pierres précieuses, des bijoux, des composants électroniques, des objets technologiques de valeur, tels que des téléphones portables ou des dispositifs d'armement, notamment comprenant des composants électroniques, etc.

Dans le contexte de la manipulation et du conditionnement d'objets de valeur tels que des billets de banques, il est courant, voire exigé par certaines banques centrales que tout ou partie de ces opérations soit mis en oeuvre par deux personnes qui doivent se surveiller mutuellement afin de s'assurer qu'aucune opération illicite ne soit réalisée par l'autre personne. Ce procédé de contrôle mutuel, qui nécessite la présence d'une seconde personne, est généralement connu selon le vocable « principe des quatre yeux ».

Ainsi, par exemple, en sortie de chaîne de fabrication de billets, le deuxième opérateur va vérifier que les opérations réalisées par le premier opérateur sont bien autorisées, à savoir en particulier que les briques de billets sont bien introduites dans leur carton (caisse de conditionnement) et que celles-ci ne sont pas extraites du carton, ou que le carton est bien positionné sur une palette de stockage et que celui-ci ne quitte pas la palette.

A la lecture de ce qui précède, on comprend que la présence d'un second opérateur occasionne un coût qui a un impact non négligeable sur le prix de revient des produits fabriqués.

Par ailleurs, bien qu'en pratique le second opérateur aide son (sa) collègue, la tâche de « surveillance » qui lui est confiée n'est pas particulièrement valorisante. De plus, il est à noter que ce moyen de contrôle n'est pas fiable à 100% puisqu'il peut présenter les faiblesses suivantes : connivence, baisse de concentration ou non application du principe des 4 yeux.

On connaît par le document US 2016/0171294 un procédé de traitement de documents de valeur comprend notamment les étapes suivantes : au moyen d'une caméra, une action d'un opérateur sur un appareil de traitement de documents de valeur est capturée. Les données d'image capturées sont ensuite traitées au moyen d'un dispositif de traitement d'images et au moins un geste prédéterminé en est extrait. Une information d'entrée pour l'appareil de traitement de documents de valeur est ensuite allouée au geste extrait. Les informations d'entrée sont fournies dans l'appareil de traitement de documents de valeur et y sont traitées.

On connaît par US2014/0244344, dans un tout autre domaine technique, à savoir celui de la cuisine, un dispositif et un procédé de surveillance d'activités qui ont lieu au sein de cette cuisine. Il s'agit ici de déceler des gestes non réguliers par exemple mis en oeuvre par des apprentis, ou des gestes interdits, au sens où ils ne respectent pas une réglementation en vigueur.

La présente invention a pour but de s'affranchir de la présence physique de deux opérateurs pour la mise en oeuvre des opérations précitées tout en garantissant que ces dernières soient réalisées sans que des manipulations non autorisées soient mises en oeuvre, ou, à tout le moins, que lorsqu'une manipulation non autorisée est réalisée, celle-ci soit immédiatement détectée.

### PRESENTATION DE L'INVENTION

A cet effet, l'invention concerne en premier lieu un dispositif de traitement d'objets de valeur pour une installation de traitement d'objets de valeur au sein de laquelle sont au moins présentes les entités suivantes : un opérateur et un objet de valeur, caractérisé par le fait qu'il comporte :
- au moins une caméra 3D configurée pour capturer spatialement dans son champ des images de ladite installation, y compris des images desdites entités, que ces entités soient statiques ou en mouvement ;
- au moins un algorithme de détection automatique et d'analyse dynamique qui, à partir d'images capturées par ladite au moins une caméra, est configuré d'une part pour reconnaître et identifier les positions successives desdites entités sur les images et, d'autre part, pour déterminer les interactions possibles entre lesdites entités, ces positions et interactions constituant des « actes à valider » ;
- au moins un algorithme de supervision qui, à partir d'une part des résultats dudit au moins un algorithme de détection automatique et d'analyse dynamique et, d'autre part, de règles définissant des actes non autorisés, est en mesure de déterminer si les « actes à valider » sont autorisés ou non ;
- au moins une interface comprenant au moins un outil d'alerte qui se déclenche en raison d'un motif d'alerte, à savoir lorsqu'au moins une séquence d'images présente une situation permettant aux algorithmes précités de reconnaître qu'au moins un « acte à valider » est un acte non autorisé, lesdits objets de valeur étant choisis dans la liste constituée par les billets de banques et autres documents sécurisés tels que des passeports ou des visas, à tous leurs stades de fabrication, c'est-à-dire en cours de fabrication ou à l'issue de celle-ci, les parfums de luxe, les pierres précieuses, les bijoux, les composants électroniques, les objets technologiques de valeur, ainsi que les ensembles des objets précédents et les réceptacles des objets précédents, lesdits actes non autorisés étant choisis dans la liste suivante : objet de valeur non visible avant sa mise en place dans un contenant, ledit opérateur est momentanément non visible dans l'installation, durée de manipulation dudit objet de valeur dépassée, objet de valeur repris en main alors qu'il a déjà été manipulé et déposé, opérateur ressortant ses mains non vides de l'installation ou d'un contenant, opérateur introduisant ses mains dans un contenant plein, objet de valeur hors d'une zone définie, manipulation simultanée de plus d'un nombre défini d'objets de valeur (notamment de plusieurs objets de valeur), nombre d'objets de valeurs dans le contenant différent de (notamment supérieur à) une valeur prédéfinie, objet de valeur ne provenant pas de l'arrivée (l'arrivée correspond à une zone définie constituant de préférence une partie seulement du champ de ladite caméra 3D), contenant déplacé alors qu'il n'est pas plein (autrement dit alors que le nombre d'objets de valeur qu'il contient diffère de la valeur prédéfinie).

Grâce à ces caractéristiques, il n'est plus nécessaire de recourir à deux opérateurs puisque le dispositif est capable de détecter les manipulations non autorisées et de déclencher le cas échéant une alerte. De plus, le fonctionnement du système étant basé sur des algorithmes, celui-ci présente un degré de fiabilité et de répétitivité bien supérieur au contrôle humain.

Selon un cas particulier de la présente invention, ledit traitement d'objets de valeur consiste en la manipulation et le conditionnement d'objets de valeurs. On entend en particulier par « manipulation et conditionnement » l'emballage, la mise en ou sur un contenant, notamment la mise en boîte, la mise en carton, la mise en caisse ou la mise sur palette, d'au moins un objet de valeur.

Dans ce qui suit, certaines entités peuvent, selon les cas, constituer un objet de valeur ou un contenant. A titre d'exemple, le dispositif selon l'invention peut concerner, selon une première variante, des briques de billets destinées à être placées dans un carton, et selon une deuxième variante, des cartons de briques de billets destinés à être placés sur une palette.

Selon d'autres caractéristiques avantageuses et non limitatives de ce dispositif, prises seules ou selon une combinaison techniquement compatible, d'au moins deux d'entre elles :
Lesdites interactions sont choisies dans le groupe suivant : nombre et mouvements relatifs dudit au moins un opérateur par rapport à au moins une autre entité ou par rapport au champ de la caméra 3D ou à une zone définie dudit champ, passage d'un état où ledit au moins un opérateur a les mains vides à un état où l'une et/ou l'autre de ses mains porte un objet de valeur et inversement et, lorsque lesdites entités comprennent au moins un contenant, passage d'un état où l'une et/ou l'autre des mains dudit au moins un opérateur est(sont) visible(s) à un état ou elle(s) est (sont) dissimulées et inversement, positions des mains relativement aux contenants, passage d'un état ouvert dudit au moins un contenant à un état fermé et inversement, et position dudit au moins un contenant dans l'espace, position dudit au moins un objet de valeur dans l'espace, notamment dans le champ de la caméra 3D ou dans une zone définie dudit champ, et position dudit au moins un objet de valeur dans ledit au moins un contenant.

Les interactions et actes non autorisés énumérés dans les deux paragraphes précédents sont particulièrement caractéristiques de la manipulation et du conditionnement d'objets de valeur.

Selon encore d'autres modes de réalisation :
- ladite interface comporte des moyens pour moduler, c'est-à-dire modifier, au moins un paramètre de déclenchement dudit outil d'alerte ;
- ladite interface comporte des moyens pour afficher ledit motif de d'alerte ;
- ladite interface comporte des moyens pour déclencher ledit outil d'alerte sur place et sur un emplacement distant tel qu'un poste de sécurité ;
- il comporte des moyens de désactivation dudit outil d'alerte, ces moyens étant doublés et opérationnels que s'ils sont activés simultanément, et suffisamment distants l'un de l'autre pour ne pas pouvoir être actionnés simultanément par une seule et même personne.

Dans l'ensemble de la présente demande, y compris les revendications, on entend par « objets de valeur » les billets de banques et autres documents sécurisés (passeports, visas, ...) à tous leurs stades de fabrication (c'est-à-dire en cours de fabrication ou à l'issue de celle-ci), des parfums de luxe, des pierres précieuses, des bijoux, des composants électroniques, des objets technologiques de valeur, tels que des téléphones portables ou des dispositifs d'armement, notamment comprenant des composants électroniques, ainsi que les ensembles des objets précédents (par exemple une brique de billets) et les réceptacles des objets précédents notamment des caisses, des cartons ou des éléments supports tels que des palettes. Il s'agit de préférence de billets de banques et d'autres documents sécurisés (passeports, visas, ...), ainsi que d'ensembles et de réceptacles de billets de banques et d'autres documents sécurisés (passeports, visas, ...).

Un autre aspect de l'invention est relatif à un procédé de traitement d'objets de valeur dans une installation de traitement d'objets de valeur au sein de laquelle sont au moins présentes les entités suivantes : un opérateur et un objet de valeur, caractérisé par le fait qu'il comporte les étapes qui consistent à :
- capturer spatialement, à l'aide d'au moins une caméra 3D, des images de ladite installation, y compris des images desdites entités, qu'elles soient statiques ou en mouvement ;
- à partir des images capturées par ladite au moins une caméra, d'une part reconnaître et identifier les positions successives desdites entités sur lesdites images et, d'autre part, identifier les interactions entre lesdites entités, ces positions et interactions constituant des « actes à valider » ;
- à partir des résultats de l'étape précédente et de règles définissant des actes non autorisés, détecter l'apparition d'au moins une séquence d'images comportant au moins un acte non autorisé ;
- activer au moins un outil d'alerte qui se déclenche lorsqu'au moins une séquence d'images comporte un acte non autorisé, lesdits objets de valeur étant choisis dans la liste constituée par les billets de banques et autres documents sécurisés tels que des passeports ou des visas, à tous leurs stades de fabrication, c'est-à-dire en cours de fabrication ou à l'issue de celle-ci, les parfums de luxe, les pierres précieuses, les bijoux, les composants électroniques, les objets technologiques de valeur, ainsi que les ensembles des objets précédents et les réceptacles des objets précédents, et lesdits actes non autorisés étant choisis dans la liste suivante : objet de valeur non visible avant sa mise en place dans un contenant, ledit opérateur est momentanément non visible dans l'installation, durée de manipulation dudit objet de valeur dépassée, objet de valeur repris en main alors qu'il a déjà été manipulé et déposé, opérateur ressortant ses mains non vides de l'installation ou d'un contenant , opérateur introduisant ses mains dans un contenant plein, l'objet de valeur sort d'une zone définie, plus d'un nombre défini d'objets de valeur sont manipulés simultanément, notamment plus d'un, le nombre d'objets de valeurs dans le contenant diffère de, notamment dépasse, une valeur prédéfinie, l'objet de valeur ne provient pas d'une zone d'arrivée, le contenant est déplacé alors qu'il n'est pas plein.

Avantageusement, lesdites interactions sont choisies dans le groupe suivant : nombre et mouvements relatifs desdits opérateurs les uns par rapport aux autres, passage d'un état où un opérateur a les mains vides à un état où l'une et/ou l'autre de ses mains porte un objet de valeur et inversement et, lorsque lesdites entités comprennent au moins un contenant, passage d'un état où l'une et/ou l'autre des mains d'un opérateur est(sont) visible(s) à un état ou elle(s) est (sont) dissimulées et inversement, positions des mains relativement aux contenants, passage d'un état ouvert dudit au moins un contenant à un état fermé et inversement, et position dudit au moins un contenant dans l'espace, objet de valeur dans ledit au moins un contenant.

Avantageusement, l'on désactive ledit outil d'alerte à l'aide de moyens de désactivation qui sont doublés et opérationnels que s'ils sont activés simultanément, ces moyens étant suffisamment distants l'un de l'autre pour ne pas pouvoir être actionnés simultanément par une seule et même personne.

### DESCRIPTION DES FIGURES

D'autres caractéristiques et avantages de l'invention apparaîtront de la description qui va maintenant en être faite, en référence aux dessins annexés, qui en représentent, à titre indicatif mais non limitatif, différents modes de réalisation possibles.

Sur ces dessins :
La figure 1 est un schéma représentant une installation de conditionnement de liasses de billets de banque mettant en oeuvre le dispositif et le procédé selon la présente invention, étant précisé qu'une seule caméra est utilisée pour balayer toute la zone de manipulation des billets ;
La figure 2 est un schéma représentant une installation de conditionnement de liasses de billets de banque mettant en oeuvre le dispositif et le procédé selon la présente invention, étant précisé que deux caméras fixes sont utilisées pour balayer toute la zone de manipulation des billets ;
La figure 3 est un schéma représentant une installation de conditionnement de liasses de billets de banque à un instant t1, mettant en oeuvre le dispositif et le procédé selon la présente invention, étant précisé que deux caméras sont utilisées pour balayer toute la zone de manipulation des billets, l'une étant fixe alors que l'autre est mobile ;
La figure 4 est un schéma analogue à celui de la figure 3, représentant la situation à un instant t2 postérieur à t1.

### DEFINITIONS

Dans l'ensemble de la présente description, y compris les revendications, les termes ci-dessous ont la signification qui suit.

Brique/liasse de billets : ensemble de billets empilés, banderolés et/ou emballés. Par le terme « emballé », on entend notamment recouvert au moins en partie d'un film.

Feuilles : feuilles de dimensions conséquentes sur et dans lesquelles a été individualisée une pluralité de billets, la découpe individuelle de ces derniers restant à mettre en oeuvre.

Contenant : réceptacle d'objets, qui consiste en une caisse ou un carton, ou élément support tel qu'une palette qui reçoit de tels réceptacles ou des objets de valeur par exemple des briques, des liasses ou des feuilles.

Caméra 3D : caméra qui envoie deux flux de natures différentes, à savoir un flux classique couleur RGB (Red/Green/Blue) et un flux en profondeur. Elle comprend notamment un projecteur infrarouge de points et deux caméras infrarouge permettant de définir la distance de chaque point projeté par rapport à la caméra. Cette dernière information permet de connaître la position spatiale dans le champ de la caméra 3D des différents éléments d'une scène.

Reconnaissance et suivi de la position d'entités dans une scène : capacité à identifier des entités, notamment des objets, des personnes ou des parties de ces derniers, la position des entités (par exemple les mains des personnes) et les positions successives de ces entités, la définition précédente valant également pour des objets de la scène, tels que des briques de billets, des feuilles et des contenants.

Interactions entre les différentes entités d'une scène :
- Lorsque ces entités sont des personnes : nombre et mouvements relatifs de ces personnes les unes par rapport aux autres.
- Lorsque ces entités sont des personnes et des objets : passage d'un état où une personne a les mains vides à un état où l'une et/ou l'autre de ses mains porte un objet et inversement, passage d'un état où l'une et/ou l'autre des mains d'une personne est(sont) visible(s) à un état ou elle(s) est (sont) dissimulées et inversement, positions des mains relativement aux contenants.
- En ce qui concerne les contenants : passage d'un état ouvert à un état fermé et inversement, et position de ces contenants dans l'espace de la scène.

### DESCRIPTION DETAILLEE DE L'INVENTION

Ainsi que cela a été précisé plus haut, le dispositif et le procédé selon la présente invention mettent en oeuvre au moins une caméra 3D, qui envoie deux flux de natures différentes, à savoir un flux classique couleur RGB et un flux de profondeur. Cette dernière information permet de connaître la position dans l'espace des différents éléments d'une scène.

Plus particulièrement, une telle caméra comprend un projecteur infrarouge de points et deux caméras infrarouge permettant de définir la distance de chaque point projeté par rapport à la caméra. Cette dernière information permet de connaître la position spatiale dans le champ de la caméra 3D des différents éléments d'une scène.

A titre purement indicatif, on peut faire usage de la caméra « Structure Core » de la société Occipital, « Realsense » de la société Intel ou « Astra » de la société Orbbec.

Une telle caméra peut être montée fixe par rapport à la scène à filmer. Mais on peut également prévoir qu'elle soit mobile. Dans cette hypothèse, cette caméra peut être montée sur un support fixe et se mouvoir en rotation sur elle-même, ou être montée sur un support mobile. Quand on a affaire à plus d'une caméra, l'une au moins d'entre elles peut être fixe et les autres mobiles, ou inversement.

Le nombre de caméras et leur position sont déterminés par la configuration de l'installation, de telle sorte à pouvoir suivre toutes les entités qui y sont présentes, ainsi que leur localisation correspondant à la zone de travail identifiée.

Lorsqu'il y a plusieurs caméras, elles sont de préférence positionnées de façon à enregistrer respectivement deux zones comprenant au moins une zone commune, par exemple pour assurer une continuité dans le suivi d'au moins une entité.

Le dispositif et le procédé selon l'invention font également usage d'au moins un algorithme dit « de détection automatique et d'analyse dynamique ». Un tel algorithme est conçu de manière à ce que, à partir des images capturées par ladite caméra, il soit en mesure, d'une part, de reconnaître et identifier les positions successives des entités sur les images et, d'autre part, de déterminer les interactions possibles entre lesdites entités, ces positions et interactions constituant ainsi des « actes à valider ».

Les entités sont à minima un opérateur et un objet de valeur, mais il peut s'agir aussi d'au moins un contenant (selon la définition donnée plus haut).

Comme précisé ci-avant, les interactions sont choisies dans le groupe suivant : nombre et mouvements relatifs desdits opérateurs les uns par rapport aux autres, passage d'un état où un opérateur a les mains vides à un état où l'une et/ou l'autre de ses mains porte un objet de valeur et inversement. Et lorsque lesdites entités comprennent au moins un contenant, les interactions comprennent le passage d'un état où l'une et/ou l'autre des mains d'un opérateur est(sont) visible(s) à un état ou elle(s) est (sont) dissimulées et inversement, positions des mains relativement aux contenants, passage d'un état ouvert dudit au moins un contenant à un état fermé et inversement, et position dudit au moins un contenant dans l'espace, objet de valeur dans ledit au moins un contenant.

L'installation et le procédé de l'invention font aussi usage d'au moins un algorithme de supervision qui, à partir d'une part des résultats de l'algorithme de détection automatique et d'analyse dynamique cité plus haut, et d'autre part de règles définissant des actes non autorisés, est en mesure de déterminer si les « actes à valider » sont autorisés ou non.

Avantageusement, ces actes non autorisés peuvent être choisis dans la liste suivante : objet de valeur non visible avant sa mise en place dans un contenant, l'opérateur est momentanément non visible dans l'installation, durée de manipulation dudit objet de valeur dépassée, objet de valeur repris en main alors qu'il a déjà été manipulé et déposé, opérateur ressortant ses mains non vides de l'installation ou d'un contenant, opérateur introduisant ses mains dans un contenant plein.

Bien entendu, le dispositif selon l'invention est pourvu d'une installation informatique ad 'hoc qui est mesure de gérer non seulement le fonctionnement de la caméra, mais également la mise en oeuvre des algorithmes.

En tout état de cause, ces algorithmes sont développés sur la base d'une analyse de risque lié à la sureté, qui permet de réduire les risques que les objets de valeurs soient subtilisés. Ainsi, par exemple :
- Les objets doivent être détectées et suivis dès leur mise à disposition à l'opérateur ;
- Les objets doivent rester visibles par le système et ne pas sortir d'une zone pré définie ;
- La durée autorisée de manipulation de l'objet est limitée dans le temps ;
- Les objets manipulés et posés ne peuvent pas être repris ;
- L'opérateur doit sortir ses mains vides de zones identifiées (carton, palette, zones de travail) ;
- L'opérateur n'est plus autorisé à introduire ses mains dans des contenants pleins ou dans certaines zones définies ;
- Toute opération « dégradée », c'est-à-dire qui comprend au moins un acte à valider non autorisé, doit se faire sous le principe des « quatre yeux ». Ces opérations sont réalisées par la présence de deux personnes qui désactivent momentanément le système.

Le dispositif selon l'invention est également pourvu d'une interface homme / système permettant notamment :
- de régler les paramètres de sensibilité du déclenchement de l'alarme (tel que par exemple la durée maximale autorisée pour tenir une brique de billets dans les mains) ;
- de visualiser le motif de déclenchement de l'alarme ;
- de déclencher une alarme sonore et/ou visuelle sur place, c'est-à-dire au sein même de l'installation et/ou au niveau d'un poste assurant la sécurité du site.

Avantageusement :
La désactivation de l'alarme est réalisée par l'appui simultané par deux personnes sur deux boutons suffisamment espacés pour qu'ils ne puissent pas être actionnés par la même personne, ce qui permet d'avoir l'assurance que deux personnes sont bien présentes.

La réactivation du dispositif peut être opérée :
- par un appui sur un bouton par l'opérateur qui a assuré précédemment le travail ;
- ou automatiquement si la caméra détecte moins de deux personnes présentes dans une zone et notamment pendant une durée définie.

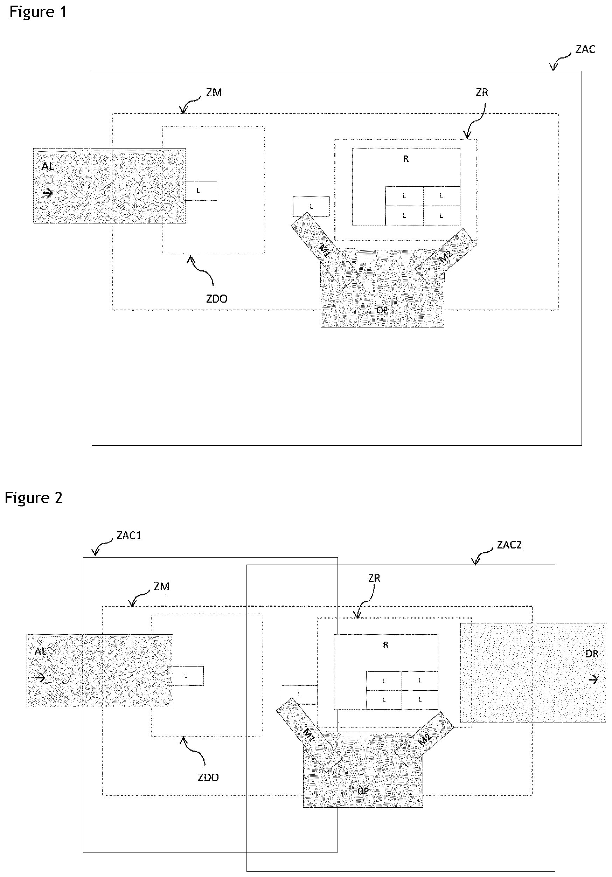

En référence à la figure 1 annexée, on définit les zones suivantes :
- ZAC : zone dans laquelle une caméra 3D enregistre des images ;
- ZM : zone comprise dans la ZAC qui est la zone de manipulation d'objets de valeur ;
- ZDO : zone comprise dans la ZM, qui est la zone de détection d'un objet de valeur, en l'occurrence une liasse L de billets ;
- ZR : zone comprise dans la ZAC qui est la zone dans laquelle une réceptacle R doit être présent et dans lequel l'objet L doit être déposé.

L'objet L est détecté à son arrivée AL dans la zone ZM, puis est suivi jusqu'à sa mise en caisse/carton dans la zone ZR.

L'opérateur est référencé OP et ses mains M1 et M2.

Un système d'alerte s'active par exemple lorsque l'une au moins des conditions suivantes n'est pas respectée :
- la liasse L est visible de son arrivée jusqu'à la mise en caisse/carton ;
- la liasse L reste moins de x secondes dans les mains de l'opérateur OP ;
- la liasse L est dans la zone ZM ;
- la liasse L reste dans la caisse / le carton ;
- l'opérateur OP sort de la zone de manipulation ZM avec les mains M1 et M2 vides.

De manière plus détaillée, on peut envisager que la manipulation des liasses L soit opérée de la manière suivante :
1 / Une liasse L arrive à hauteur de l'opérateur OP.
   Une seule liasse est mise à disposition.
   Le dispositif est informé de la présence de la liasse L.
   La caméra détecte la présence de la liasse L.
2/La liasse L est prise par l'opérateur OP.
   Retournement de la liasse par l'opérateur OP pour contrôle.
3/Dépôt de la liasse dans le réceptacle (carton) R.
4/Le carton peut être transféré vers une « scotcheuse » (c'est-à-dire un appareil qui permet de fermer ledit carton en employant du ruban adhésif tel que du « scotch » (marque déposée)) à l'aide d'un chariot mobile.

L'alarme se déclenche notamment si les conditions suivantes ne sont pas respectées :
Les liasses L ne doivent pas rester plus de x secondes (temps paramétrable) dans les mains de l'opérateur.

Chaque liasse ne doit pas sortir de la zone ZM.

Les liasses L ne doivent pas sortir du réceptacle R.

L'opérateur OP doit sortir de la zone ZM avec les mains vides (avec ou sans gants).

On peut éventuellement envisager que les opérations suivantes soient mises en oeuvre et détectées :
- Etiquetage des liasses L quand elles sont dans le réceptacle R.

Pour ce faire, le chariot qui porte le réceptacle peut être décalé dans une zone précise afin que la caméra puisse travailler avec les liasses L vues à 'plat'.

Dans ce cas, l'alarme se déclenchera si l'une ou l'autre des conditions suivantes n'est pas satisfaite :
Les liasses L ne doivent pas sortir du réceptacle R.
La main M1 ou M2 doit sortir vide du réceptacle R.
Une seule main peut rentrer dans le réceptacle R.
La main ne peut rester dans le réceptacle R plus de y secondes.

La main ne doit pas être occultée lorsqu'elle est dans le réceptacle R.

### AUTRES CARACTERISTIQUES POSSIBLES

Selon une variante, le réceptacle R (carton) est transféré vers un dispositif annexe permettant de réaliser une opération annexe, notamment un dispositif de fermeture par ruban adhésif (« scotcheuse »), d'emballage ou de scellage, notamment au moyen d'un support de transfert, par exemple un chariot.

Ledit support de transfert est de préférence muni d'une poignée afin que les mains n'entrent pas dans le réceptacle R (carton).

La zone du dispositif annexe destinée à recevoir le réceptacle R à « scotcher » (carton) est de préférence munie d'au moins une marque, notamment une cible ou un cadre, permettant au dispositif de détecter la zone où doit être positionné le réceptacle R (carton) pour subir ladite opération annexe.

A nouveau, on peut envisager que les opérations suivantes soient mises en oeuvre et détectées :
Fermeture des rabats des réceptacles R.
Poussée du carton vers une « scotcheuse ».
Pose du Scotch (marque déposée) pour fermer le réceptacle R.

Dans ce cas, l'alarme se déclenchera si l'une ou l'autre des conditions suivantes n'est pas satisfaite :
Les mains doivent toujours être à l'extérieur des rabats.
Les liasses ne doivent pas sortir du réceptacle R.
Les mains doivent sortir vides du réceptacle R.
Le réceptacle R ne peut être évacué que dans une seule direction.

On peut aussi envisager que les opérations ultérieures suivantes soient mises en oeuvre et détectées :
Prise du réceptacle R plein et fermé, et dépôt sur une palette.

« Tracking », c'est-à-dire suivi du réceptacle R, associé à des capteurs de bonne pose de ce dernier.

Dans ce cas, l'alarme se déclenchera si l'une ou l'autre des conditions suivantes n'est pas satisfaite :

Le réceptacle R ne doit pas sortir d'une zone définie et ne doit jamais être occulté.

Le réceptacle doit rester fermé (rabats fermés).

Le réceptacle ne doit pas rester plus de z secondes (temps paramétrable) dans les mains.

Les différents réceptacles posés sur la palette ne doivent pas sortir de la palette.

A la figure 2 est représentée une situation qui a de nombreux points communs avec celle de la figure 1. Sur cette figure, les références communes avec celles de la figure 1 correspondent à des objets/zones identiques.

Toutefois, on a affaire ici à deux caméras fixes dans les zones d'action sont référencées ZAC1 et ZAC2. Par ailleurs est référencée DR la zone de départ des réceptacles R.

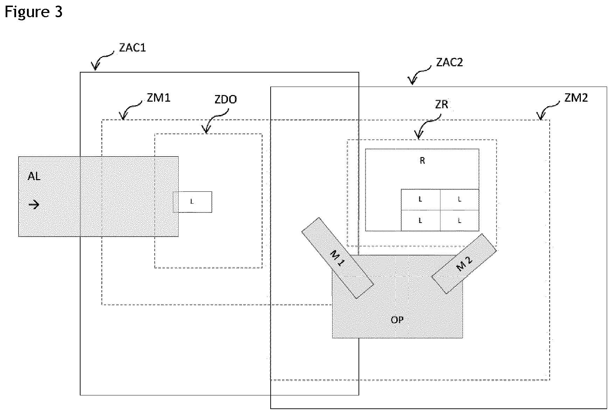

Dans la situation de la figure 3, on a également affaire à deux caméras dont les zones d'action sont référencées ZAC1 et ZAC2. La caméra 1 est fixe, tandis que la caméra 2 est mobile, par exemple fixé à un support mobile (tel qu'une palette) sur lequel est posé le réceptacle R. La figure 3 correspond à une situation à un instant t1. Les deux caméras définissent deux zones de manipulation ZM1 et ZM2.

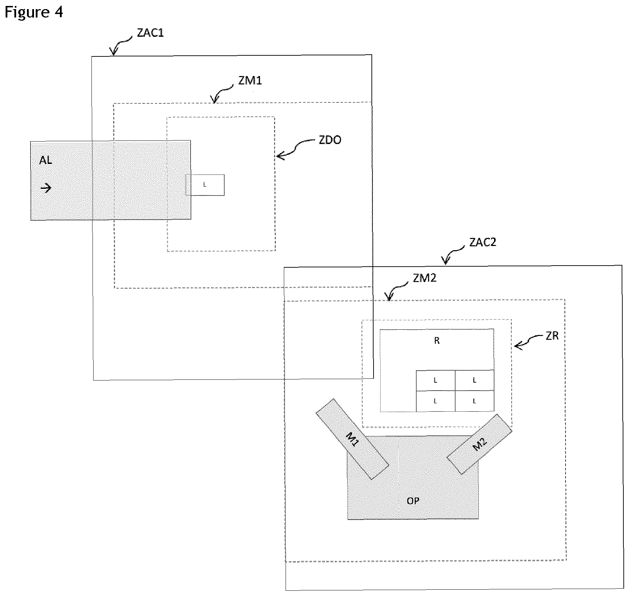

A la figure 4, on se situe à instant t2 postérieur à t1, le support mobile sur lequel est fixée la caméra 2 ayant été déplacé.

## Revendications

1. Dispositif de traitement d'objets de valeur (L) pour une installation de traitement d'objets de valeur (L) au sein de laquelle sont au moins présentes les entités suivantes : un opérateur (OP) et un objet de valeur (L), **caractérisé par le fait qu'**il comporte :
- au moins une caméra 3D configurée pour capturer spatialement dans son champ des images de ladite installation, y compris des images desdites entités (OP ; L), que ces entités soient statiques ou en mouvement ;
- au moins un algorithme de détection automatique et d'analyse dynamique qui, à partir d'images capturées par ladite au moins une caméra, est configuré d'une part pour reconnaître et identifier les positions successives desdites entités (OP ; L) sur les images et, d'autre part, pour déterminer les interactions possibles entre lesdites entités (OP ; L), ces positions et interactions constituant des « actes à valider » ;
- au moins un algorithme de supervision qui, à partir d'une part des résultats dudit au moins un algorithme de détection automatique et d'analyse dynamique et, d'autre part, de règles définissant des actes non autorisés, est en mesure de déterminer si les « actes à valider » sont autorisés ou non ;
- au moins une interface comprenant au moins un outil d'alerte qui se déclenche en raison d'un motif d'alerte, à savoir lorsqu'au moins une séquence d'images présente une situation permettant aux algorithmes précités de reconnaître qu'au moins un « acte à valider » est un acte non autorisé,
lesdits objets de valeur étant choisis dans la liste constituée par les billets de banques et autres documents sécurisés tels que des passeports ou des visas, à tous leurs stades de fabrication, c'est-à-dire en cours de fabrication ou à l'issue de celle-ci, les parfums de luxe, les pierres précieuses, les bijoux, les composants électroniques, les objets technologiques de valeur, ainsi que les ensembles des objets précédents et les réceptacles des objets précédents, et lesdits actes non autorisés étant choisis dans la liste suivante : objet de valeur (L) non visible avant sa mise en place dans un contenant (R), ledit opérateur (OP) est momentanément non visible dans l'installation, durée de manipulation dudit objet de valeur (L) dépassée, objet de valeur (L) repris en main alors qu'il a déjà été manipulé et déposé, opérateur (OP) ressortant ses mains (M1 ; M2) non vides de l'installation ou d'un contenant (R), opérateur (OP) introduisant ses mains (M1 ; M2) dans un contenant (R) plein, l'objet de valeur (L) sort d'une zone définie, plus d'un nombre défini d'objets de valeur (L) sont manipulés simultanément, notamment plus d'un, le nombre d'objets de valeurs (L) dans le contenant diffère de, notamment dépasse, une valeur prédéfinie, l'objet de valeur (L) ne provient pas d'une zone d'arrivée, le contenant est déplacé alors qu'il n'est pas plein.

2. Dispositif selon revendication 1, **caractérisée par le fait que** lesdites interactions sont choisies dans le groupe suivant : nombre et mouvements relatifs dudit au moins un opérateur (OP) par rapport à au moins une autre entité (OP ; L) ou par rapport au champ de la caméra 3D ou à une zone définie dudit champ, passage d'un état où ledit au moins un opérateur (OP) a les mains (M1 ; M2) vides à un état où l'une et/ou l'autre de ses mains (M1 ; M2) porte un objet de valeur (L) et inversement et, lorsque lesdites entités comprennent au moins un contenant (R), passage d'un état où l'une et/ou l'autre des mains (M1 ; M2) dudit au moins un opérateur (OP) est(sont) visible(s) à un état ou elle(s) est (sont) dissimulées et inversement, positions des mains (M1 ; M2) relativement aux contenants (R), passage d'un état ouvert dudit au moins un contenant (R) à un état fermé et inversement, et position dudit au moins un contenant (R) dans l'espace, position dudit au moins un objet de valeur (L) dans l'espace, notamment dans le champ de la caméra 3D ou dans une zone définie dudit champ, et position dudit au moins un objet de valeur (L) dans ledit au moins un contenant.

3. Dispositif selon l'une des revendications 1 ou 2, **caractérisé par le fait que** ladite interface comporte des moyens pour moduler, c'est-à-dire modifier, au moins un paramètre de déclenchement dudit outil d'alerte.

4. Dispositif selon l'une des revendications 1 à 3, **caractérisé par le fait que** ladite interface comporte des moyens pour afficher ledit motif de d'alerte.

5. Dispositif selon l'une des revendications 1 à 4, **caractérisé par le fait que** ladite interface comporte des moyens pour déclencher ledit outil d'alerte sur place et sur un emplacement distant tel qu'un poste de sécurité.

6. Dispositif selon l'une des revendications précédentes, **caractérisé par le fait qu'**il comporte des moyens de désactivation dudit outil d'alerte, ces moyens étant doublés et opérationnels que s'ils sont activés simultanément, et suffisamment distants l'un de l'autre pour ne pas pouvoir être actionnés simultanément par une seule et même personne.

7. Procédé de traitement d'objets de valeur (L) dans une installation de traitement d'objets de valeur (L) au sein de laquelle sont au moins présentes les entités suivantes : un opérateur (OP) et un objet de valeur (L), **caractérisé par le fait qu'**il comporte les étapes qui consistent à :
- capturer spatialement, à l'aide d'au moins une caméra 3D, des images de ladite installation, y compris des images desdites entités (OP ; L), qu'elles soient statiques ou en mouvement ;
- à partir des images capturées par ladite au moins une caméra, d'une part reconnaître et identifier les positions successives desdites entités (OP ; L) sur lesdites images et, d'autre part, identifier les interactions entre lesdites entités (OP ; L), ces positions et interactions constituant des « actes à valider » ;
- à partir des résultats de l'étape précédente et de règles définissant des actes non autorisés, détecter l'apparition d'au moins une séquence d'images comportant au moins un acte non autorisé ;
- activer au moins un outil d'alerte qui se déclenche lorsqu'au moins une séquence d'images comporte un acte non autorisé,
lesdits objets de valeur étant choisis dans la liste constituée par les billets de banques et autres documents sécurisés tels que des passeports ou des visas, à tous leurs stades de fabrication, c'est-à-dire en cours de fabrication ou à l'issue de celle-ci, les parfums de luxe, les pierres précieuses, les bijoux, les composants électroniques, les objets technologiques de valeur, ainsi que les ensembles des objets précédents et les réceptacles des objets précédents, et lesdits actes non autorisés étant choisis dans la liste suivante : objet de valeur (L) non visible avant sa mise en place dans un contenant (R), ledit opérateur (OP) est momentanément non visible dans l'installation, durée de manipulation dudit objet de valeur (L) dépassée, objet de valeur (L) repris en main alors qu'il a déjà été manipulé et déposé, opérateur (OP) ressortant ses mains (M1 ; M2) non vides de l'installation ou d'un contenant (R), opérateur (OP) introduisant ses mains (M1 ; M2) dans un contenant (R) plein, l'objet de valeur (L) sort d'une zone définie, plus d'un nombre défini d'objets de valeur (L) sont manipulés simultanément, notamment plus d'un, le nombre d'objets de valeurs (L) dans le contenant diffère de, notamment dépasse, une valeur prédéfinie, l'objet de valeur (L) ne provient pas d'une zone d'arrivée, le contenant est déplacé alors qu'il n'est pas plein.

8. Procédé selon la revendication 7, **caractérisé par le fait que** lesdites interactions sont choisies dans le groupe suivant : nombre et mouvements relatifs desdits opérateurs (OP) les uns par rapport aux autres, passage d'un état où un opérateur (OP) a les mains (M1 ; M2) vides à un état où l'une et/ou l'autre de ses mains (M1 ; M2) porte un objet de valeur (L) et inversement et, lorsque lesdites entités comprennent au moins un contenant (R), passage d'un état où l'une et/ou l'autre des mains (M1 ; M2) d'un opérateur (OP) est(sont) visible(s) à un état ou elle(s) est (sont) dissimulées et inversement, positions des mains (M1 ; M2) relativement aux contenants (R), passage d'un état ouvert dudit au moins un contenant (R) à un état fermé et inversement, et position dudit au moins un contenant (R) dans l'espace, objet de valeur (L) dans ledit au moins un contenant (R).

9. Procédé selon l'une des revendications 7 ou 8, **caractérisé par le fait que** l'on désactive ledit outil d'alerte à l'aide de moyens de désactivation qui sont doublés et opérationnels que s'ils sont activés simultanément, ces moyens étant suffisamment distants l'un de l'autre pour ne pas pouvoir être actionnés simultanément par une seule et même personne.

## Patentansprüche

1. Vorrichtung zur Bearbeitung von Wertgegenständen (L) für eine Anlage zur Bearbeitung von Wertgegenständen (L), in der zumindest die folgenden Entitäten vorhanden sind: ein Bediener (OP) und ein Wertgegenstand (L), **dadurch gekennzeichnet, dass** sie aufweist:
- mindestens eine 3D-Kamera, die ausgelegt ist, um in ihrem Feld räumlich Bilder der Anlage zu erfassen, einschließlich Bilder der Entitäten (OP; L), unabhängig davon, ob diese Entitäten statisch oder in Bewegung sind;
- mindestens einen Algorithmus zur automatischen Erkennung und dynamischen Analyse, der ausgehend von Bildern, die von der mindestens einen Kamera erfasst wurden, ausgelegt ist, um einerseits die aufeinanderfolgenden Positionen der Entitäten (OP; L) auf den Bildern zu erkennen und zu identifizieren und andererseits die möglichen Interaktionen zwischen den Entitäten (OP; L) zu bestimmen, wobei diese Positionen und Interaktionen "zu validierende Handlungen" darstellen;
- mindestens einen Überwachungsalgorithmus, der einerseits anhand der Ergebnisse des mindestens einen Algorithmus zur automatischen Erkennung und dynamischen Analyse und andererseits anhand von Regeln, die nicht erlaubte Handlungen definieren, in der Lage ist zu bestimmen, ob die "zu validierenden Handlungen" erlaubt sind oder nicht;
- mindestens eine Schnittstelle, die mindestens ein Warnwerkzeug umfasst, das aufgrund eines Warngrunds ausgelöst wird, nämlich wenn mindestens eine Bildsequenz eine Situation aufweist, die es den oben genannten Algorithmen ermöglicht zu erkennen, dass mindestens eine "zu validierende Handlung" eine nicht erlaubte Handlung ist,
wobei die Wertgegenstände aus der Liste ausgewählt sind, die aus Banknoten und anderen gesicherten Dokumenten wie Pässen oder Visa in allen ihren Herstellungsstadien, das heißt während oder nach der Herstellung, Luxusparfüms, Edelsteinen, Schmuck, elektronischen Bauteilen, technologischen Wertgegenständen sowie Sets der vorhergehenden Gegenstände und Behältern der vorhergehenden Gegenstände besteht, und die nicht erlaubten Handlungen aus der folgenden Liste ausgewählt sind: Wertgegenstand (L) vor dem Einlegen in einen Behälter (R) nicht sichtbar, Bediener (OP) momentan in der Anlage nicht sichtbar, die Zeit für die Handhabung des Wertgegenstands (L) ist überschritten, der Wertgegenstand (L) wird wieder in die Hand genommen, obwohl er bereits gehandhabt und abgelegt wurde, der Bediener (OP) zieht seine nicht leeren Hände (M1; M2) aus der Anlage oder einem Behälter (R) heraus, der Bediener (OP) führt seine Hände (M1; M2) in einen vollen Behälter (R), der Wertgegenstand (L) verlässt einen definierten Bereich, mehr als eine definierte Anzahl von Wertgegenständen (L) wird gleichzeitig gehandhabt, insbesondere mehr als einer, die Anzahl der Wertgegenstände (L) in dem Behälter weicht von einem vordefinierten Wert ab, insbesondere überschreitet diesen, der Wertgegenstand (L) kommt nicht aus einem Zielbereich, der Behälter wird bewegt, obwohl er nicht voll ist.

2. Vorrichtung nach Anspruch 1, **dadurch gekennzeichnet, dass** die Interaktionen aus der folgenden Gruppe ausgewählt sind: Anzahl und relative Bewegungen des mindestens einen Bedieners (OP) in Bezug auf mindestens eine andere Entität (OP; L) oder in Bezug auf das Feld der 3D-Kamera oder einen definierten Bereich des Feldes, Wechsel aus einem Zustand, in dem der mindestens eine Bediener (OP) leere Hände (M1; M2) hat, in einen Zustand, in dem die eine und/oder die andere seiner Hände (M1; M2) einen Wertgegenstand (L) trägt und umgekehrt, und, wenn die Entitäten mindestens einen Behälter (R) umfassen, Wechsel aus einem Zustand, in dem die eine und/oder die andere der Hände (M1; M2) des mindestens einen Bedieners (OP) sichtbar ist/sind, in einem Zustand, in dem sie verborgen ist/sind und umgekehrt, Positionen der Hände (M1; M2) relativ zu den Behältern (R), Wechsel aus einem offenen Zustand des mindestens einen Behälters (R) in einen geschlossenen Zustand und umgekehrt, und Position des mindestens einen Behälters (R) im Raum, Position des mindestens einen Wertgegenstands (L) im Raum, insbesondere im Feld der 3D-Kamera oder in einem definierten Bereich des Feldes, und Position des mindestens einen Wertgegenstands (L) in dem mindestens einen Behälter.

3. Vorrichtung nach einem der Ansprüche 1 oder 2, **dadurch gekennzeichnet, dass** die Schnittstelle Mittel zum Modulieren, das heißt zum Ändern, mindestens eines Auslöseparameters des Warnwerkzeugs umfasst.

4. Vorrichtung nach einem der Ansprüche 1 bis 3, **dadurch gekennzeichnet, dass** die Schnittstelle Mittel zum Anzeigen des Warngrunds umfasst.

5. Vorrichtung nach einem der Ansprüche 1 bis 4, **dadurch gekennzeichnet, dass** die Schnittstelle Mittel zum Auslösen des Warnwerkzeugs vor Ort und an einem entfernten Ort wie eine Sicherheitsstation umfasst.

6. Vorrichtung nach einem der vorhergehenden Ansprüche, **dadurch gekennzeichnet, dass** sie Mittel zur Deaktivierung des Warnwerkzeugs umfasst, wobei diese Mittel doppelt vorhanden und nur dann funktionsfähig sind, wenn sie gleichzeitig aktiviert werden, und ausreichend weit voneinander entfernt sind, damit sie nicht gleichzeitig von ein und derselben Person betätigt werden können.

7. Verfahren zur Bearbeitung von Wertgegenständen (L) in einer Anlage zur Bearbeitung von Wertgegenständen (L), in der zumindest die folgenden Entitäten vorhanden sind: ein Bediener (OP) und ein Wertgegenstand (L), **dadurch gekennzeichnet, dass** es die Schritte umfasst, die darin bestehen:
- räumliches Erfassen von Bildern der Anlage, einschließlich von Bildern der Entitäten (OP; L), mit Hilfe von mindestens einer 3D-Kamera, unabhängig davon, ob sie statisch oder in Bewegung sind;
- anhand der von der mindestens einen Kamera erfassten Bilder einerseits Erkennen und Identifizieren der aufeinanderfolgenden Positionen der Entitäten (OP; L) auf den Bildern und andererseits Identifizieren der Interaktionen zwischen den Entitäten (OP; L), wobei diese Positionen und Interaktionen "zu validierende Handlungen" darstellen;
- ausgehend von den Ergebnissen des vorherigen Schritts und von Regeln, die nicht erlaubte Handlungen definieren, Erkennen des Auftretens mindestens einer Bildsequenz, die mindestens eine nicht erlaubte Handlung enthält;
- Aktivieren mindestens eines Warnwerkzeugs, das ausgelöst wird, wenn mindestens eine Bildsequenz eine nicht erlaubte Handlung enthält,
wobei die Wertgegenstände aus der Liste ausgewählt sind, die aus Banknoten und anderen gesicherten Dokumenten wie Pässen oder Visa in allen ihren Herstellungsstadien, das heißt während oder nach der Herstellung, Luxusparfüms, Edelsteinen, Schmuck, elektronischen Bauteilen, technologischen Wertgegenständen sowie Sets der vorhergehenden Gegenstände und Behältern der vorhergehenden Gegenstände besteht, und die nicht erlaubten Handlungen aus der folgenden Liste ausgewählt sind: Wertgegenstand (L) vor dem Einlegen in einen Behälter (R) nicht sichtbar, Bediener (OP) momentan in der Anlage nicht sichtbar, die Zeit für die Handhabung des Wertgegenstands (L) ist überschritten, der Wertgegenstand (L) wird wieder in die Hand genommen, obwohl er bereits gehandhabt und abgelegt wurde, der Bediener (OP) zieht seine nicht leeren Hände (M1; M2) aus der Anlage oder einem Behälter (R) heraus, der Bediener (OP) führt seine Hände (M1; M2) in einen vollen Behälter (R), der Wertgegenstand (L) verlässt einen definierten Bereich, mehr als eine definierte Anzahl von Wertgegenständen (L) wird gleichzeitig gehandhabt, insbesondere mehr als einer, die Anzahl der Wertgegenstände (L) in dem Behälter weicht von einem vordefinierten Wert ab, insbesondere überschreitet diesen, der Wertgegenstand (L) kommt nicht aus einem Zielbereich, der Behälter wird bewegt, obwohl er nicht voll ist.

8. Verfahren nach Anspruch 7, **dadurch gekennzeichnet, dass** die Interaktionen aus der folgenden Gruppe ausgewählt sind: Anzahl und relative Bewegungen der Bediener (OP) in Bezug zu den anderen, Wechsel aus einem Zustand, in dem ein Bediener (OP) leere Hände (M1; M2) hat, in einen Zustand, in dem die eine und/oder die andere seiner Hände (M1; M2) einen Wertgegenstand (L) trägt und umgekehrt, und, wenn die Entitäten mindestens einen Behälter (R) umfassen, Wechsel aus einem Zustand, in dem die eine und/oder die andere der Hände (M1; M2) eines Bedieners (OP) sichtbar ist/sind, in einen Zustand, in dem sie verborgen ist/sind und umgekehrt, Positionen der Hände (M1; M2) relativ zu den Behältern (R), Wechsel aus einem offenen Zustand des mindestens einen Behälters (R) in einen geschlossenen Zustand und umgekehrt, und Position des mindestens einen Behälters (R) im Raum, Wertgegenstands (L) im Behälter (R).

9. Verfahren nach einem der Ansprüche 7 oder 8, **dadurch gekennzeichnet, dass** das Warnwerkzeug mit Hilfe von Deaktivierungsmitteln deaktiviert wird, die doppelt vorhanden und nur dann funktionsfähig sind, wenn sie gleichzeitig aktiviert werden, wobei diese Mittel ausreichend weit voneinander entfernt sind, damit sie nicht gleichzeitig von ein und derselben Person betätigt werden können.

## Claims

1. A device for processing valuables (L) for an installation for processing valuables (L) in which at least the following entities are present: an operator (OP) and a valuable (L), **characterized by** the fact that it includes:
- at least one 3D camera configured to spatially capture images of said installation in its field, including images of said entities (OP; L), whether these entities are static or in motion;
- at least one automatic detection and analysis algorithm which, based on images captured by said at least one camera, is configured firstly to recognize and identify the successive positions of said entities (OP ; L) on the images and, moreover, to determine the possible interactions between said entities (OP ; L), these positions and interactions constituting "actions to be validated";
- at least one supervision algorithm which, based on, firstly, the results of said at least one automatic detection and analysis algorithm and, secondly, rules defining unauthorized actions, is able to determine whether or not the "actions to be validated" are authorized;
- at least one interface comprising at least one alarm tool which is triggered due to an alarm reason, namely when at least one sequence of images presents a situation allowing the aforementioned algorithms to recognize that at least one "action to be validated" is an unauthorized action,
said valuables being chosen from the list consisting of banknotes and other secure documents such as passports or visas, at all their stages of manufacture, i.e. during manufacture or after it, luxury fragrances, precious stones, jewelry, electronic components, valuable technological items, as well as sets of the preceding items and the receptacles of the preceding items, and said unauthorized actions being chosen from the following list: valuable (L) non-visible before being placed in a container (R), said operator (OP) is momentarily non-visible in the installation, handling time of said valuable (L) exceeded, valuable (L) picked up again when it has already been handled and set down, operator (OP) bringing his non-empty hands (M1 ; M2) out of the installation or out of a container (R), operator (OP) inserting his hands (M1 ; M2) into a full container (R), the valuable (L) leaving a defined area, more than a defined number of valuables (L) are handled simultaneously, in particular more than one, the number of valuables (L) in the container differs from, and in particular exceeds, a predefined value, the valuable (L) does not come from an arrival area, the container is moved when it is not full.

2. The device as claimed in claim 1, **characterized by** the fact that said interactions are chosen from the following group: number and relative movements of said at least one operator (OP) with respect to at least one other entity (OP; L) or with respect to the field of the 3D camera or to a defined area of said field, transition from a state in which said at least one operator (OP) has his hands (M1 ; M2) empty to a state in which one and/or the other of his hands (M1 ; M2) is carrying a valuable (L) and conversely and, when said entities comprise at least one container (R), transition from a state in which one and/or the other of the hands (M1 ; M2) of said at least one operator (OP) is (or are) visible to a state in which it (or they) is (or are) hidden and conversely, positions of the hands (M1 ; M2) in relation to the containers (R), transition from an open state of at least one container (R) to a closed state and conversely, and position of said at least one container (R) in space, position of said at least one valuable (L) in space, in particular in the field of the 3D camera or in a defined area of said field, and position of said at least one valuable (L) in said at least one container.

3. The device as claimed in one of claims 1 or 2, **characterized by** the fact that said interface includes means for modulating, i.e. modifying, at least one parameter for triggering said alarm tool.

4. The device as claimed in one of claims 1 to 3, **characterized by** the fact that said interface includes means for displaying said alarm reason.

5. The device as claimed in one of claims 1 to 4, **characterized by** the fact that said interface includes means for triggering said alarm tool on-site and at a remote location such as a security station.

6. The device as claimed in one of the preceding claims, **characterized by** the fact that it includes means for disabling said alarm tool, these means being duplicated and operational only if they are enabled simultaneously, and sufficiently remote from one another to not be able to be activated simultaneously by a single person.

7. A method for processing valuables (L) in an installation for processing valuables (L) in which at least the following entities are present: an operator (OP) and a valuable (L), **characterized by** the fact that it includes the steps consisting in:
- using at least one 3D camera, spatially capturing images of said installation, including images of said entities (OP ; L), whether they are static or in motion;
- based on images captured by said at least one camera, firstly recognizing and identifying the successive positions of said entities (OP ; L) on said images and, secondly, identifying the interactions between said entities (OP ; L), these positions and interactions constituting "actions to be validated";
- based on the results of the preceding step and rules defining unauthorized actions, detecting the appearance of at least one sequence of images including at least one unauthorized action;
- enabling at least one alert tool which is triggered when at least one sequence of images includes an unauthorized action,
said valuables being chosen from the list consisting of bank notes and other secure documents such as passports or visas, at all their stages of manufacture, i.e. during manufacturing or after it, luxury fragrances, precious stones, jewelry, electronic components, technological valuables, as well as sets of the preceding items and the receptacles of the preceding items, and said unauthorized actions being chosen from the following list: valuables (L) non-visible before being placed in a container (R), said operator (OP) is momentarily non-visible in the installation, handling time of said valuables (L) exceeded, valuable (L) picked up again when it has already been handled and set down, operator (OP) bringing his non-empty hands (M1 ; M2) out of the installation or out of a container (R), operator (OP) inserting his hands (M1 ; M2) into a full container (R), the valuable (L) leaving a defined area, more than a defined number of valuables (L) are handled simultaneously, in particular more than one, the number of valuables (L) in the container differs from, in particular exceeds, a predefined value, the valuable (L) does not come from an arrival area, the container is moved when it is not full.

8. The method as claimed in claim 7, **characterized by** the fact that said interactions are chosen from the following group: number and relative movements of said operators (OP) with respect to one another, transition from a state in which an operator (OP) has his hands (M1 ; M2) empty to a state in which one and/or the other of his hands (M1 ; M2) is carrying a valuable (L) and conversely and, when said entities comprise at least one container (R), transition from a state in which one and/or the other of the hands (M1 ; M2) of an operator (OP) is (or are) visible to a state in which it (or they) is (or are) hidden and conversely, positions of the hands (M1 ; M2) in relation to the containers (R), transition from an open state of said at least one container (R) to a closed state and conversely, and position of said at least one container (R) in space, valuable (L) in said at least one container (R).

9. The method as claimed in one of claims 7 or 8, **characterized by** the fact that said alarm tool is disabled using disabling means which are duplicated and operational only if they are enabled simultaneously, these means being remote enough from one another to not be able to be activated simultaneously by one single person.
